# EUROPEAN PATENT SPECIFICATION

(11) **EP 1 775 057 B1**
(45) Date of publication and mention of the grant of the patent: **10.12.2008**
(21) Application number: 06122013.3
(22) Date of filing: 10.10.2006
(51) Int. Cl.: B23K 11/00, B21F 27/12, B21F 27/10

(54) **Machine and method for the production of reinforcement cages**
Vorrichtung und Verfahren zur Herstellung von Bewehrungskäfigen
Dispositif et méthode de fabrication des cages de renforcement

(30) Priority: 11.10.2005 IT UD20050169
(43) Date of publication of application: 18.04.2007
(73) Proprietor: M.E.P. Macchine Elettroniche Piegatrici S.p.A., I-33010 Reana del Rojale (UD) (IT)
(72) Inventor: Del Fabro, Giorgio, 33100 Udine (IT)
(74) Representative: Petraz, Gilberto Luigi

(56) References cited:
- WO-A-02/057045
- US-A- 3 706 331
- US-A- 4 228 335

## Description

### FIELD OF THE INVENTION

The present invention concerns a machine able to assemble reinforcement cages for reinforced concrete structures such as beams, pillars and foundations.

The present invention also concerns the connected method used in a machine to make cages, and in particular the method with which the round pieces or longitudinal metal rods, are welded to the relative stirrups.

US-A-3.706.331 discloses a welding apparatus and method for a cage-forming machine having the features of the preamble of main claims 1 and 9.

### BACKGROUND OF THE INVENTION

It is known that a reinforcement cage for reinforced concrete structures consists of longitudinal rods and a plurality of transverse stirrups spaced longitudinally at intervals, which keep said rods joined together so as to form a geometric structure of a desired section.

The rods and each of the stirrups are normally attached by means of welding.

In present-day machines to make cages, that is, machines that are totally or partly automated, able to reduce the costs of the assembly operations, there are welding units with automated drive that are activated in a coordinated manner with every cycle of forward movement of the longitudinal rods, and with every progressive and sequential insertion of a new stirrup in the welding position.

The welding units used in such machines for making cages can each comprise a pair of fixed welding elements, opposite each other and facing; the welding elements are able to be fed electrically and, with every cycle of advance of the longitudinal rods, a stirrup to be welded is located between them.

Welding units are also known in which at least the welding element that is positioned on the inner side of the stirrup is movable with respect to the plane on which the stirrup lies, so as to move selectively outside the bulk of the latter, facilitating the operations of inserting and discharging the stirrups.

In both cases, either due to the presence of a fixed welding element or due to the trajectory followed by the movable element, it is impossible to locate two adjacent stirrups at a reduced distance due to the interference that is created between parts of the perimeter of the stirrup, such as for example terminal hooks disposed at 135° or at 180°, and welding elements.

This entails a considerable operating disadvantage, particularly for cages that require, at least in the initial and/or final part of the cage, a distance between the stirrups that can be as little as 3-5 cm.

For this reason it is necessary to weld the stirrups that are close to each other in another way, for example manually, which causes an extension in the times for each welding cycle, and also the risk of knocking and sliding of the stirrups against the welding elements.

One purpose of the present invention is to achieve a machine for producing reinforcement cages which comprises a welding unit configured in such a manner as to allow the stirrups to be positioned, and joined to the relative longitudinal rods, even in a position of extreme reciprocal proximity, for example even less than 5 cm.

Another purpose is to achieve a machine having a welding unit that allows to reduce the cycle times for every operation to attach the stirrups and longitudinal rods, and also the risks of knocks between the stirrups and the welding elements and the relative damage.

The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above purposes, a machine according to the present invention is applied for the production of reinforcement cages consisting of a plurality of longitudinal rods connected by transverse stirrups disposed at intervals along them.

To be more exact, the machine according to the invention comprises at least a welding unit including at least two welding elements, for example electrodes, which are positioned at the moment of welding on opposite sides with respect to the longitudinal rods and the stirrups to be connected, so as to create the desired pressure, at least at the moment of welding, between the longitudinal rod and the relative perimeter segment of the stirrup to be welded.

According to a feature of the present invention, the welding unit comprises at least a first welding element which, at the moment of welding, is selectively taken from a first inactive position, in which it is outside the bulk of the relative stirrup to be welded, and at least slightly distanced therefrom, to a second welding position, in which it puts itself in contact, from outside, with the perimeter segment of the stirrup to be welded.

According to the invention, the welding unit also comprises at least a second welding element, which is selectively taken from a first inactive position, in which it is outside the bulk of the transverse stirrup, to a second welding position, in which it is inside the bulk of the stirrup, that is, in a condition inside the stirrup, and contacts, from inside the stirrup, a relative longitudinal rod, in order to keep it pressed against said segment of stirrup and prepare it for the welding operation.

By bulk of the stirrup we mean the area delimited by and consisting of the metal wire that forms the stirrup.

In this way, the welding unit has a first operating condition in which both its welding elements are disposed outside the bulk of the stirrups. By doing this it is possible to position the stirrups simply and easily, even in an extremely close position, for example as little as 3-5 cm, to an adjacent stirrup, without the risk of interference or knocks between the stirrups and the welding elements.

Moreover, since the welding elements of the welding unit can be positioned in an inactive position outside the bulk of the stirrup, the latter can be disposed with respect to the longitudinal rods by inserting it substantially from any direction.

The machine according to the invention comprises movement means, which are able to be configured to move at least the second welding element so as to take it, with at least a first insertion movement, from the first inactive position to a position inside the bulk of the stirrup, and with at least a second positioning movement from the inside position to the second welding position. The first insertion movement and the second positioning movement are carried out along trajectories substantially parallel to a plane on which the stirrup lies.

In this way, the insertion of the second welding element can take place in the space comprised between one stirrup and the one immediately after, and substantially perpendicularly to the longitudinal axis of the latter, and therefore without requiring an action/insertion space in a direction longitudinal to the cage.

In this way, during insertion, the space involved in the trajectory of the movement is substantially equivalent to the space of its bulk, for example equal to about 2 cm.

In a preferential form of embodiment, the first insertion movement of the second welding element is made along a direction facing from the outside of the stirrup towards the inside of the bulk of the stirrup, while the second positioning movement is divided into two sub-movements, that is, a first sub-movement along a first direction facing towards one side of the transverse stirrup, and a second sub-movement along a second direction, continuous to the first direction, and facing towards the first welding element.

In this way, the second welding element follows a substantially U-shaped trajectory in which first it is inserted between two adjacent transverse stirrups inside their bulk, and then it moves laterally, at least until it takes the relative longitudinal rod into contact with a lateral segment of the stirrup to be welded, and finally it moves towards the first welding element so as to position the longitudinal rod exactly in correspondence with the segment of bar on which the first welding element rests and the welding is to be performed.

This movement of the second welding element thus allows to position the longitudinal rod with respect to the stirrup with extreme precision, for example in correspondence with a corner of the latter, achieving the desired pressure of the rod and the stirrup, thus improving the quality of the cage made.

Moreover, with the present invention it is possible to provide a limited number of welding units with respect to the longitudinal rods to be welded, for example only one or two for welding four longitudinal rods. In fact, it is possible to move the welding unit or units both laterally and longitudinally, to position them in correspondence with a different longitudinal rod and perform the required welding operation.

However, it comes within the scope of the invention to provide as many welding units as there are longitudinal rods to be welded and hence the welding operations to be performed for each stirrup.

### BRIEF DESCRIPTION OF THE DRAWINGS

These characteristics and advantages of the present invention will become apparent from the following description of a preferential form of embodiment, given as a non-restrictive example with reference to the attached drawings wherein:
- - fig. 1: is a schematic view from above of a machine for making cages according to the present invention;
- - figs. 2a-2g: show in sequence, with a schematic front view, the steps in the welding operation performed by the welding unit of the machine in fig. 1;
- - fig. 3: is a front view of the machine in fig. 1 applied for a different type of stirrup.

### DETAILED DESCRIPTION OF A PREFERENTIAL FORM OF EMBODIMENT OF THE INVENTION

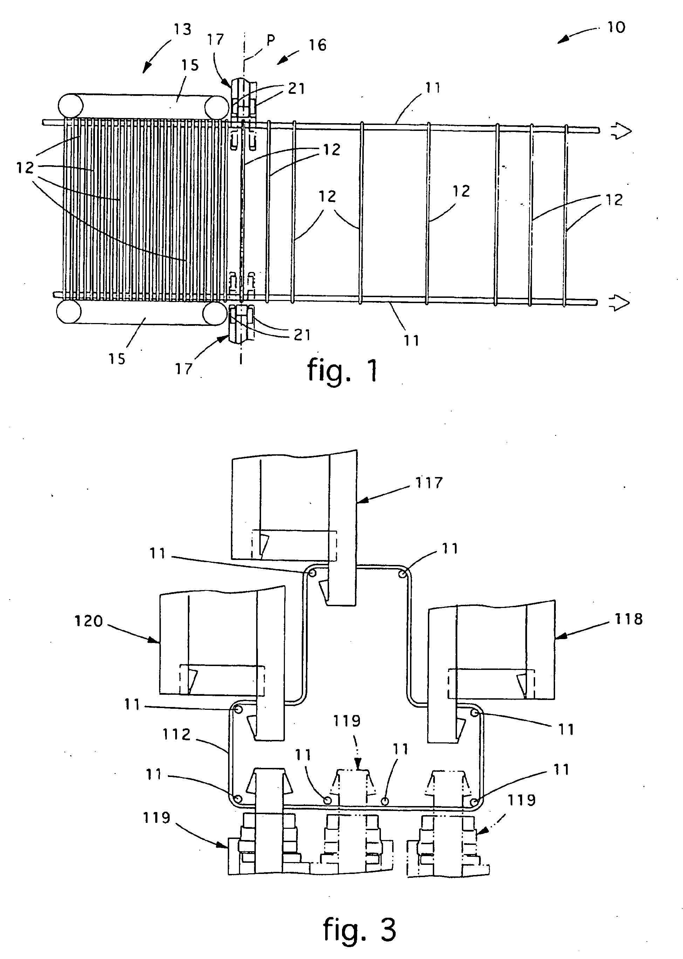

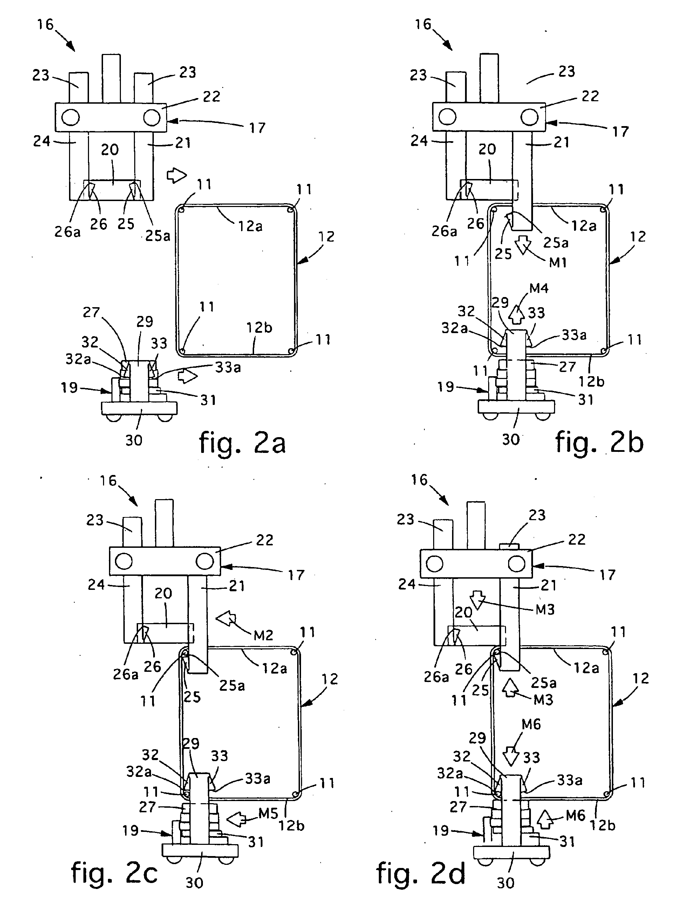

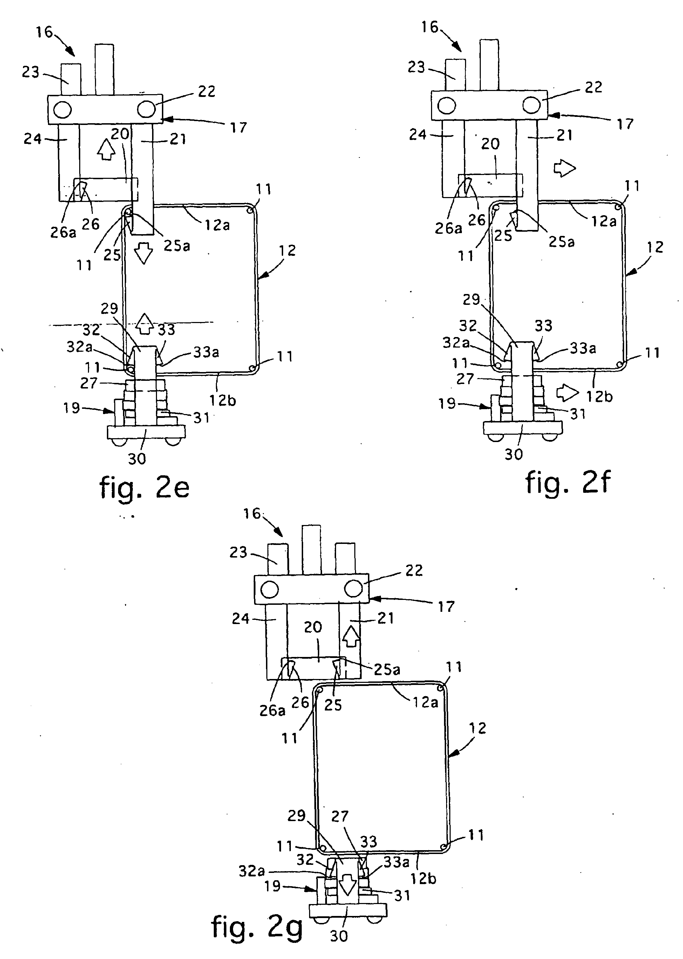

With reference to figs. 1 and 2a-2g, a machine 10 according to the present invention is able to produce, substantially automatically, reinforcement cages or pre-cages consisting in this case of four longitudinal rods 11 and a plurality of transverse stirrups 12 with a quadrangular section, welded together.

The longitudinal rods 11 can be definitive or design rods, that is, having a structural function, or auxiliary rods having only the function of connecting the stirrups 12.

The machine 10 comprises, in a substantially known manner, a store 13 in which the stirrups 12 are disposed adjacent to each other and moved by one or more feed members 15, for example with a chain or screw, continuously or step-wise, towards a welding station 16 in which the stirrups 12 are welded to the longitudinal rods 11.

Advantageously, since the stirrups 12 have a substantially closed profile, the longitudinal rods 11 are already inserted inside the stirrups 12 in the store 13, so that once the reciprocal welding of the stirrup 12 and rods 11 has been carried out, by drawing the latter forwards by one step, it is possible to proceed in sequence with the welding of another stirrup 12 and so on, without having to insert the new stirrup 12 on each occasion into the rods 11.

It is not excluded that, if the stirrups 12 have an open profile, for example U-shaped or C-shaped, they can be inserted on the relative rods 11 indifferently from the side, from above or from below.

The welding station 16 comprises, in this case, two welding units, that is, a first unit 17 disposed in correspondence with an upper part of the stirrup 12, and a second unit 19, disposed in correspondence with a lower part of the stirrup 12. In this case, each welding unit 17, 19 is able to weld to the stirrup 12 two relative longitudinal rods 11.

To be more exact, the welding units 17, 19 are mounted on respective guides, for example rack-type or suchlike, which allow them to be positioned both vertically, to adapt to the height of the stirrup 12 and/or to weld two or more rods 11 on the height of the stirrup 12, and also horizontally, to weld two or more rods 11 on the width of the stirrup 12.

It also comes within the scope of the invention to provide a number of welding units equal to the number of the longitudinal rods to be welded on each stirrup.

The first welding unit 17 comprises a first welding electrode 20 and two pairs of second welding electrodes 21 and 24. The first electrode 20 and the second electrodes 21 and 24 are able to be positioned, in the operating welding condition, on opposite sides with respect to the longitudinal rod 11 and the stirrup 12, in order to exert the correct pressure between the elements to be welded and to guarantee high quality welding.

To be more exact, the first electrode 20 is able to weld two longitudinal rods 11 in correspondence with two upper corners of the transverse stirrup 12, and is selectively movable between a first inactive condition in which it is outside the bulk of the stirrup 12 to be welded, although advantageously in a position close to one side thereof, and a second welding position in which it puts itself in direct outside contact with a segment 12a thereof.

The second electrodes 21 are disposed symmetrically, on one side or the other, with respect to the first electrode 20 and are selectively movable between a first inactive position in which they are outside the bulk of the stirrup 12, advantageously substantially facing and adjacent to the first electrode 20, and a second welding position in which they find themselves positioned astride the segment 12a inside the bulk of the stirrup 12 and contact, from inside the stirrup 12, the longitudinal rod 11, in order to keep it in contact, with a desired pressure, with the segment 12a and prepare it for the welding operation.

Figs. 2a-2g show, simply as an example, only some steps in the cycle of moving the second electrodes indicated with the reference number 21. The second electrodes indicated with the number 24 have an analogous functioning to that of the second electrodes 21, with reference to the welding of the second longitudinal rod 11; therefore, the movement thereof from the first inactive position to the second welding position will not be described in detail here.

In this case, both the first and the second electrodes 20, 21 are movable from the respective inactive positions to the respective welding positions, by means of a movement trolley 22, which transports the electrodes 20 and 21 from the reciprocal inactive positions to a position near the stirrup 12, and by one or more linear actuators 23 which take the electrodes 20 and 21 to the reciprocal welding positions.

To be more exact, with reference to figs. 2a-2g, the movement of the second electrodes 21 provides, after they have been brought closer by the movement trolley 22, a first insertion movement M1 of the second electrodes 21 inside the stirrup 12, commanded by the linear actuators 23 and facing towards the geometric center of the stirrup 12, in this case downwards; a second lateral movement M2, commanded by the movement trolley 22, to take the second electrodes 21 into contact with the longitudinal rod 11 and thrust it into contact with the adjacent side of the stirrup 12, and a third ascending movement M3, in which the electrodes 21, driven by the linear actuators 23, lift the longitudinal rod 11 so as to take it to the ideal position for welding to the stirrup 12, in this case by thrusting it against the corner defined inside the stirrup 12 in order to facilitate the welding thereof.

During this last movement M3 of the second electrodes 21, the first electrode 20 is moved by the linear actuators 23 until it contacts the segment 12a, so that the entire first welding unit 17 substantially grips the stirrup 12 and rod 11, and carries out the reciprocal welding.

To be more exact, each second electrode 21, 24, comprises at one end a respective welding platelet 25, 26, provided with a relative thrust surface 25a, 26a, inclined so that during the third movement M3, the relative longitudinal rod 11 is thrust and positioned in correspondence with the corner of the transverse stirrup 12.

To be more exact, the surface 25a and the surface 26a are inclined in specular fashion to each other with respect to a median axis of the first welding unit 17, so that, in the second welding position of the relative pair of electrodes 21 or 24, they are substantially facing the longitudinal rod 11 to be welded.

Once this condition has been reached, the longitudinal rods 11 is pressed at two points by the relative pair of second electrodes 21, or 24, while the first electrode 20 thrusts on the opposite side on the relative segment 12a of the stirrup 12. In this way, three points of contact are identified between electrodes 20, 21 or 24, stirrup 12 and longitudinal rod 11, thus defining a welding plane substantially perpendicular to the plane P on which the stirrup 12 lies, that is, guaranteeing that the longitudinal rods 11 and stirrup 12 are positioned perpendicularly.

Finally, in a substantially known manner, electric current is made to pass through the electrodes 20, 21 or 24, thus effecting the welding of the longitudinal rod 11 and stirrup 12.

Once welding has been carried out, the second electrodes 21, through the movement trolley 22 and the linear actuators 23, are commanded to make three movements having an inverse direction with respect to the aforesaid movements M1, M2 and M3, so as to release the second electrodes 21 form the bulk of the stirrup 12. By doing this it is possible to prepare the first welding unit 17 to effect the same positioning and welding operations on a second longitudinal rod 11.

To be more exact, from the position shown in fig. 2g, the movement trolley 22 translates the first welding unit towards the right so as to position the pair of second electrodes 24 in correspondence with the second upper longitudinal rod 11 and repeat with the latter the same operating cycle of movement described above for the pair of second electrodes 21.

The second welding unit 19 comprises a respective first welding electrode 27 and a pair of second welding electrodes 29. The first electrode 27 and the second electrodes 29 of the second welding unit 19 are able to be positioned, in the operating condition wherein they effect the welding of the relative longitudinal rod 11 to the stirrup 12, on opposite sides with respect to the longitudinal rod 11 and the stirrup 12.

To be more exact, the first electrode 27 is able to weld two longitudinal rods 11 in correspondence with two lower corners of the stirrup 12, and is selectively movable between a first inactive position in which it is outside the bulk of the stirrup 12 to be welded, and a second welding position in which it contacts a segment 12b of the stirrup 12 externally from below.

The second electrodes 29 are selectively movable between a first inactive position in which they are outside the bulk of the stirrup 12, and a second welding position in which they find themselves positioned astride the segment 12b inside the bulk of the stirrup 12 and contact, from inside the stirrup 12, the longitudinal rod 11, in order to keep it in contact with the segment 12b and prepare it for the welding operation.

In this case, both the first and the second electrodes 27, 29 are movable from the respective inactive positions to the respective welding positions, by means of a movement trolley 30, which transports the electrodes 27 and 29 from the reciprocal inactive positions to a position near the stirrup 12, and by one or more linear actuators 31 which take the electrodes 20 and 21 to the reciprocal welding positions.

To be more exact, with reference to figs. 2a-2g, the movement of the second electrodes 29 provides, after they have been brought closer by the movement trolley 30, a first insertion movement M4 of the second electrodes 29 inside the stirrup 12, commanded by the linear actuators 31 and facing towards the geometric center of the stirrup 12, in this case upwards; a second lateral movement M5, commanded by the movement trolley 30, to take the second electrodes 29 into contact with the longitudinal rod 11 and thrust it into contact with the adjacent side of the stirrup 12, and a third descending movement M6, in which the electrodes 29 thrust the longitudinal rod 11 downwards so as to take it to the ideal position for welding to the stirrup 12, in this case in correspondence with the corner.

During this last movement M6 the first electrode 27 is also moved by the linear actuators 31 until it contacts the segment 12b, so that the entire second welding unit 19 substantially grips the stirrup 12 and rod 11, and carries out their reciprocal welding.

To be more exact, each second electrode 29 comprises, on opposite sides of one end, two welding platelets 32, 33, each provided with a relative thrust surface 32a, 33a, inclined so that during the third movement M6, the relative longitudinal rod 11 is thrust and positioned in correspondence with the corner of the stirrup 12.

To be more exact, the surface 32a and the surface 33a are inclined in specular fashion to each other with respect to a median axis of the first welding unit 17, so that, in the second welding position of the second pair of electrodes 29, they are substantially facing the longitudinal rod 11 to be welded.

As for the first welding unit 17, in this case too, once this condition has been reached, the relative longitudinal rod 11 is pressed at two points by the relative pair of second electrodes 29, while the first electrode 27 thrusts from the opposite side on the relative segment 12b of the stirrup 12, so as to define the welding plane substantially perpendicular to the plane P on which the transverse stirrup 12 lies.

Once welding has been carried out, the second electrode 26 is moved in opposite directions to the aforesaid M4, M5 and M6, so as to proceed with the welding of another longitudinal rod 11.

For the second welding unit 19 too, with reference to fig. 2g, the movement trolley 30 translates the entire second welding unit 19 towards the right, so as to position the pair of second electrodes 29 in correspondence with the second lower longitudinal rod 11 and repeat with the latter the same operating cycle of movement described above for welding the first longitudinal rod 11.

It is clear, however, that modifications and/or additions of parts or steps may be made to the machine 10 as described heretofore and the relative welding method, without departing from the scope of the present invention as defined by the appended claims.

As shown in the variant in fig. 3, the machine 10 is applied for making reinforcement cages with stirrups 112 having a section substantially like an upside-down T.

In this case, six longitudinal rods 11 have to be welded and, according to the shape of the stirrup 112 a number greater than two welding units is provided, in this case four, 117, 118, 119 and 129, having respective first and second electrodes movable between a first inactive position and a second welding position according to the characteristic of the present invention.

It is also clear that, although the present invention has been described with reference to specific examples, a person of skill in the art shall certainly be able to achieve many other equivalent forms of machine and method for the production of reinforcement cages, having the characteristics as set forth in the claims and hence all coming within the field of protection defined thereby.

## Claims

1. Machine for the production of reinforcement cages consisting of a plurality of longitudinal rods (11) connected by transverse stirrups (12) disposed at intervals along them, said machine comprising a welding unit (17, 19, 117, 118, 119, 120) having at least two welding elements (20, 21, 24, 27, 29) able to be positioned, at the moment of welding, on opposite sides with respect to said longitudinal rods (11) and said transverse stirrups (12) to be connected, said welding unit (17, 19, 117, 118, 119, 120) comprising at least a first welding element (20, 27) able to be selectively taken from a first inactive position in which it is outside the bulk of the relative transverse stirrup (12) to be welded, to a second welding position in which it contacts externally a segment (12a, 12b) of said transverse stirrup (12), and at least a second welding element (21, 24, 29) able to be selectively taken between a first inactive position in which it is outside the bulk of said transverse stirrup (12), and a second welding position in which it is inside the bulk of said transverse stirrup (12) and contacts from inside the transverse stirrup (12) a relative longitudinal rod (11) in order to keep it in contact with said segment (12a, 12b) of said transverse stirrup (12) and prepare it for welding to said transverse stirrup (12), the device also comprising movement means (22, 23, 30, 31) able to move at least said second welding element (21, 24, 29) in order to take it with at least a first substantially linear insertion movement (M1, M4) from said first inactive position to a condition inside the bulk of the transverse stirrup (12) and with at least a second substantially linear positioning movement (M2, M3; M5, M6) from said inside condition to said second welding position, said first movement (M1, M4) and said second movement (M2, M3; M5, M6) being effected along trajectories substantially parallel to a plane (P) on which said transverse stirrup (12) lies, **characterized in that** said welding unit (17, 19) comprises at least a pair of second welding elements (21, 24, 29) disposed symmetrically and on opposite sides with respect to said first welding element (20), and able to be disposed substantially astride said segment (12a, 12b) inside the bulk of said stirrup (12), and to contact at two points said longitudinal rod (11) from inside said stirrup (12).

2. Machine as in claim 1, **characterized in that** said second movement is divided into a first sub-movement (M2, M5) along a first direction facing towards one side of said transverse stirrup (12) and a second sub-movement (M3, M6) along a second direction, continuous to the first direction, and facing towards the first welding element (20, 27).

3. Machine as in any claim from 1 or 2, **characterized in that** said movement means comprise at least a movement trolley (22, 30) able to transport said first (20, 27) and said second (21, 24, 29) welding elements from the reciprocal fisrt inactive positions to a position near said stirrup (12), and one or more linear actuators (23, 31) able to take said second welding elements (21, 24, 29) to the reciprocal welding positions.

4. Machine as in claim 1, **characterized in that** said welding unit (17) comprises two pairs of second welding elements (21, 24), each one able to prepare a relative longitudinal rod (11) for welding.

5. Machine as in any claim hereinbefore, **characterized in that** each of said second welding elements (21, 24, 29) comprises at one end at least a respective welding plate (25, 26, 32, 33) provided with a relative thrust surface (25a, 26a, 32a, 33a) inclined so as to maintain, in said second welding position, the relative longitudinal rod (11) in correspondence with said segment (12a, 12b) of said stirrup (12).

6. Machine as in claims 4 and 5, **characterized in that** the thrust surface (25a) of the welding plate (25) of a first of said two pairs of second welding elements (21) is inclined in specular manner to the thrust surface (26a) of the welding plate (26) of a second of said two pairs of second welding elements (24) with respect to a median axis of the relative welding unit (17).

7. Machine as in claim 5, **characterized in that** each of said second welding elements (29) comprises, on opposite sides of one end, two welding plates (32, 33), each provided with a relative thrust surface (32a, 33a) for the relative longitudinal rod (11).

8. Machine as in claim 7, **characterized in that** the thrust surface (32a) of a first of said two welding plates (32) of said second welding elements (29) is inclined in specular manner to the thrust surface (33a) of the second welding plate (33) with respect to a median axis of the relative welding unit (19).

9. Method for the production of reinforcement cages consisting of a plurality of longitudinal rods (11) connected by transverse stirrups (12) disposed at intervals along them, said method comprising at least a first positioning step of positioning one of said transverse stirrups (12) in correspondence with two welding elements (20, 21, 24, 27, 29) of a welding unit (17, 19, 117, 118, 119, 120) and at least a second welding step wherein said two welding elements (20, 21, 24, 27, 29) keep said transverse stirrup (12) and said longitudinal rod (11) connected to each other and effect the reciprocal welding thereof, between said first positioning step and said second welding step at least a first of said welding elements (20, 27) being taken from a first inactive position in which it is outside the bulk of the relative transverse stirrup (12) to be welded, to a second welding position in which it contacts externally a segment (12a, 12b) of said transverse stirrup (12), and at least a second of said welding elements (21, 29) is taken from a first inactive position in which it is outside the bulk of said transverse stirrup (12), to a second welding position in which it is inside the bulk of said transverse stirrup (12) and contacts from inside the transverse stirrup (12) a relative longitudinal rod (11) in order to keep it in contact with said segment (12a, 12b) of said transverse stirrup (12) and prepare it for said welding step, **characterized in that** said second welding element (21, 24, 29) effects at least a first substantially linear insertion movement (M1, M4) from said first inactive position to a condition inside the bulk of the transverse stirrup (12) and a second substantially linear positioning movement (M2, M3; M5, M6) from said inside condition to said second welding position, said first movement (M1, M4) and said second movement (M2, M3; M5, M6) being effected along trajectories substantially parallel to a plane (P) on which said transverse stirrup (12) lies, wherein in the welding step at least a pair of second welding elements (21, 24, 29) is used, said pair of welding elements being disposed symmetrically and on opposite sides with respect to said first welding element (20) substantially astride said segment (12a, 12b) inside the bulk of said stirrup (12) for contacting at two points said longitudinal rod (11) from inside said stirrup (12).

10. Method as in claim 9, **characterized in that** said second movement takes place in a first sub-movement (M2, M5) along a first direction facing towards one side of said transverse stirrup (12) and a second sub-movement (M3, M6) along a second direction, continuous to the first direction, and facing towards the first welding element (20, 27).

## Patentansprüche

1. Maschine zum Herstellen von Bewehrungskäfigen aus mehreren Längsstäben (11), die über mit Intervallen entlang ihnen angeordnete Querrahmenbügel (12) miteinander verbunden sind, wobei diese Maschine eine Schweißeinheit (17, 19, 117, 118, 119, 120) mit mindestens zwei Schweißelementen (20, 21, 24, 27, 29) aufweist, die beim Schweißen an entgegengesetzten Seiten in Bezug auf die Längsstäbe (11) und die Querrahmenbügel (12), die miteinander zu verbinden sind, positioniert werden können, wobei die Schweißeinheit (17, 19, 117, 118, 119, 120) mindestens ein erstes Schweißelement (20, 27), das selektiv von einer ersten, inaktiven Position, in der es sich außerhalb des Volumens des zugehörigen, zu schweißenden Querrahmenbügels (12) befindet, an eine zweite Schweißposition gebracht werden kann, in der es von außen mit einem Segment (12a, 12b) des Querrahmenbügels (12) in Kontakt steht, und mindestens ein zweites Schweißelement (21, 24, 29) aufweist, das selektiv zwischen einer ersten, inaktiven Position, in der es sich außerhalb des Volumens des Querrahmenbügels (12) befindet, und einer zweiten Schweißposition, in der es sich innerhalb des Volumens des Querrahmenbügels (12) befindet und von der Innenseite desselben mit einem zugehörigen Längsstab (11) in Kontakt tritt, um ihn mit dem zweiten Segment (12a, 12b) des Querrahmenbügels (12) zu halten und ihn für das Anschweißen an diesen vorzubereiten, verstellt werden kann, wobei die Vorrichtung auch eine Verstelleinrichtung (22, 23, 30, 31) aufweist, die zumindest das zweite Schweißelement (21, 24, 29) verstellen kann, um es mit mindestens einer ersten, im Wesentlichen linearen Einführbewegung (M1, M4) von der ersten, inaktiven Position in einen Zustand innerhalb des Volumens des Querrahmenbügels (12) zu bringen, und mit mindestens einer zweiten, im Wesentlichen linearen Positionierbewegung (M2, M3; M5, M6) vom Zustand im Inneren zur zweiten Schweißposition zu bringen, wobei die erste Bewegung (M1, M4) und die zweite Bewegung (M2, M3; M5, M6) entlang Bahnen im Wesentlichen parallel zu einer Ebene (P) ausgeführt werden, in der der Querrahmenbügel (12) liegt, **dadurch gekennzeichnet, dass** die Schweißeinheit (17, 19) mindestens ein Paar zweiter Schweißelemente (21, 24, 29) aufweist, die symmetrisch und an entgegensetzten Seiten in Bezug auf das erste Schweißelement (20) angeordnet sind und im Wesentlichen das Segment (12a, 12b) im Inneren des Volumens des Rahmenbügels (12) überbrückend so angeordnet werden können, dass sie von der Innenseite des Rahmenbügels (12) her an zwei Punkten mit dem Längsstab (11) in Kontakt treten.

2. Maschine nach Anspruch 1, **dadurch gekennzeichnet, dass** die zweite Bewegung in eine erste Unterbewegung (M2, M5) entlang einer ersten, einer Seite des Querrahmenbügels (12) zugewandten Richtung und eine zweite Unterbewegung (M3, M6) entlang einer zweiten Richtung, die kontinuierlich zur ersten Richtung, dem ersten Schweißelement (20, 27) zugewandt, verläuft, unterteilt ist.

3. Maschine nach einem der Ansprüche 1 oder 2, **dadurch gekennzeichnet, dass** die Verstelleinrichtung mindestens einen Verstellwagen (22, 30), der das erste (20, 27) und das zweite (21, 24, 29) Schweißelement von den reziprok liegenden ersten, inaktiven Positionen an eine Position nahe dem Rahmenbügel (12) transportieren kann, und ein oder mehrere Linearstellglieder (23, 31) aufweist, die die zweiten Schweißelemente (21, 24, 29) an die reziproken Schweißpositionen bringen können.

4. Maschine nach Anspruch 1, **dadurch gekennzeichnet, dass** die Schweißeinheit (17) zwei Paare zweiter Schweißelemente (21, 24) aufweist, von denen jedes einen zugehörigen Längsstab (11) zum Schweißen vorbereiten kann.

5. Maschine nach einem der vorstehenden Ansprüche, **dadurch gekennzeichnet, dass** jedes der zweiten Schweißelemente (21, 24, 29) an einem Ende mindestens eine zugehörige Schweißplatte (25, 26, 32, 33) aufweist, die mit einer zugehörigen, schrägen Schubfläche (25a, 26a, 32a, 33a) versehen ist, um, in der zweiten Schweißposition, den zugehörigen Längsstab (11) entsprechend dem Segment (12a, 12b) des Rahmenbügels (12) zu halten.

6. Maschine nach den Ansprüchen 4 und 5, **dadurch gekennzeichnet, dass** die Schubfläche (25a) der Schweißplatte (25) eines ersten der zwei Paare zweiter Schweißelemente (21) auf gespiegelte Weise zur Schubfläche (26a) der Schweißplatte (26) eines zweiten der zwei Paare zweiter Schweißelemente (24) in Bezug auf eine Mittelachse der zugehörigen Schweißeinheit (17) geneigt ist.

7. Maschine nach Anspruch 5, **dadurch gekennzeichnet, dass** jedes der zweiten Schweißelemente (29), an entgegengesetzten Seiten eines Endes, zwei Schweißplatten (32, 33) aufweist, von denen jede mit einer zugehörigen Schubfläche (32a, 33a) für den zugehörigen Längsstab (11) versehen ist.

8. Maschine nach Anspruch 7, **dadurch gekennzeichnet, dass** die Schubfläche (32a) einer ersten der zwei Schweißplatten (32) der zweiten Schweißelemente (29) auf gespiegelte Weise zur Schubfläche (33a) der zweiten Schweißplatte (33) in Bezug auf eine Mittelachse der zugehörigen Schweißeinheit (19) geneigt ist.

9. Verfahren zum Herstellen von Bewehrungskäfigen aus mehreren Längsstäben (11), die durch mit Intervallen entlang ihnen angeordnete Querrahmenbügel (12) verbunden sind, wobei dieses Verfahren Folgendes beinhaltet: mindestens einen ersten Positionierschritt zum Positionieren eines der Querrahmenbügel (12) entsprechend zwei Schweißelementen (20, 21, 24, 27, 29) einer Schweißeinheit (17, 19, 117, 118, 119, 120), und mindestens einen zweiten Schweißschritt, in dem die zwei Schweißelemente (20, 21, 24, 27, 29) den Querrahmenbügel (12) und den Längsstab (11) in Verbindung miteinander halten und für ein zugehöriges reziprokes Schweißen sorgen, wobei zwischen dem ersten Positionierschritt und dem zweiten Schweißschritt mindestens ein erstes der Schweißelemente (20, 27) von einer ersten, inaktiven Position, in der es sich außerhalb des Volumens des zugehörigen, zu schweißenden Querrahmenbügels (12) befindet, zu einer zweiten Schweißposition gebracht wird, in der es von außen mit einem Segment (12a, 12b) des Querrahmenbügels (12) in Kontakt tritt, und wobei mindestens ein zweites der Schweißelemente (21, 29) von einer ersten, inaktiven Position, in der es sich außerhalb des Volumens des Querrahmenbügels (12) befindet, an eine zweite Schweißposition gebracht wird, in der es sich innerhalb des Volumens desselben befindet und vom Inneren desselben mit einem zugehörigen Längsstab (11) in Kontakt tritt, um ihn in Kontakt mit dem Segment (12a, 12b) des Querrahmenbügels (12) zu halten und ihn für den Schweißschritt vorzubereiten, **dadurch gekennzeichnet, dass** das zweite Schweißelement (21, 24, 29) für mindestens eine erste, im Wesentlichen lineare Einführbewegung (M1, M4) von der ersten, inaktiven Position in einen Zustand innerhalb des Volumens des Querrahmenbügels (12) sowie eine zweite, im Wesentlichen lineare Positionierbewegung (M2, M3; M5, M6) vom Zustand im Inneren zur zweiten Schweißposition sorgt, wobei die erste Bewegung (M1, M4) und die zweite Bewegung (M2, M3, M5, M6) entlang Bahnen ausgeführt werden, die im Wesentlichen parallel zu einer Ebene (P) verlaufen, in der der Querrahmenbügel (12) liegt, wobei im Schweißschritt mindestens ein Paar zweiter Schweißelemente (21, 24, 29) verwendet wird, wobei die Schweißelemente dieses Paars symmetrisch und an entgegengesetzten Seiten in Bezug auf das erste Schweißelement (20) so angeordnet sind, dass sie das Segment (12a, 12b) im Inneren des Volumens des Rahmenbügels (12) im Wesentlichen überbrücken, um vom Inneren desselben an zwei Punkten mit dem Längsstab (11) in Kontakt zu treten.

10. Verfahren nach Anspruch 9, **dadurch gekennzeichnet, dass** die zweite Bewegung mit einer ersten Unterbewegung (M2, M5) entlang einer ersten Richtung, die einer Seite des Querrahmenbügels (12) zugewandt ist, und einer zweiten Unterbewegung (M3, M6), entlang einer zweiten Richtung, die kontinuierlich zur ersten Richtung verläuft und dem ersten Schweißelement (20, 27) zugewandt ist, erfolgt.

## Revendications

1. Dispositif de fabrication de cages de renforcement constituées d'une pluralité de barres longitudinales (11) assemblées par des étriers transversaux (12) disposés à intervalles le long de celles-ci, ledit dispositif comprenant une unité de soudage (17, 19, 117, 118, 119, 120) ayant au moins deux éléments de soudage (20, 21, 24, 27, 29) pouvant être positionnés, au moment du soudage, de part et d'autre desdites barres longitudinales (11) et desdits étriers transversaux (12) à assembler, ladite unité de soudage (17, 19, 117, 118, 119, 120) comprenant au moins un premier élément de soudage (20, 27) pouvant être amené sélectivement d'une première position inactive, où il se trouve à l'extérieur du volume occupé par l'étrier transversal correspondant (12) à souder, jusqu'à une seconde position de soudage où il touche de l'extérieur un segment (12a, 12b) dudit étrier transversal (12), et au moins un second élément de soudage (21, 24, 29) pouvant être amené sélectivement entre une première position inactive, où il se trouve à l'extérieur du volume occupé par ledit étrier transversal (12), et une seconde position de soudage, où il se trouve à l'intérieur du volume occupé par ledit étrier transversal (12) et touche, de l'intérieur de l'étrier transversal (12), une barre longitudinale correspondante (11) afin de la maintenir en contact avec ledit un segment (12a, 12b) dudit étrier transversal (12) et de la préparer en vue du soudage audit étrier transversal (12), le dispositif comprenant aussi des moyens de déplacement (22, 23, 30, 31) aptes à déplacer au moins ledit second élément de soudage (21, 24, 29) pour l'amener par au moins un premier mouvement d'introduction sensiblement linéaire (M1, M4) de ladite première position inactive jusqu'à un certain état à l'intérieur du volume occupé par l'étrier transversal (12), et par au moins un second mouvement de positionnement sensiblement linéaire (M2, M3 ; M5, M6) depuis ledit état intérieur jusqu'à ladite seconde position de soudage, ledit premier mouvement (M1, M4) et ledit second mouvement (M2, M3 ; M5, M6) s'effectuant suivant des trajectoires sensiblement parallèles à un plan (P) sur lequel repose ledit étrier transversal (12), dispositif **caractérisé en ce que** ladite unité de soudage (17, 19) comprend au moins une paire de seconds éléments de soudage (21, 24, 29) disposés symétriquement de part et d'autre dudit premier élément de soudage (20), et pouvant être disposés sensiblement à cheval sur ledit segment (12a, 12b), à l'intérieur du volume occupé par ledit étrier (12), et toucher en deux point ladite barre longitudinale (11) de l'intérieur dudit étrier (12).

2. Dispositif selon la revendication 1, **caractérisé en ce que** ledit second mouvement se divise en un premier sous-mouvement (M2, M5) suivant une première direction orientée vers un côté dudit étrier transversal (12), et un second sous-mouvement (M3, M6), suivant une seconde direction, continue à la première direction, et orientée vers le premier élément de soudage (20, 27).

3. Dispositif selon l'une quelconque des revendications 1 ou 2, **caractérisé en ce que** lesdits moyens de déplacement comprennent au moins un chariot de déplacement (22, 30) apte à transporter lesdits premiers (20, 27) et lesdits seconds (21, 24, 29) éléments de soudage de leur première position inactive respective jusqu'à une position proche dudit étrier (12), et un ou plusieurs actionneurs linéaires (23, 31) aptes à amener lesdits seconds éléments de soudage (21, 24, 29) jusqu'aux positions de soudage respectives.

4. Dispositif selon la revendication 1, **caractérisé en ce que** ladite unité de soudage (17) comprend deux paires de seconds éléments de soudage (21, 24), chacune étant apte à préparer une barre longitudinale correspondante (11) en vue du soudage.

5. Dispositif selon l'une quelconque des revendications ci-dessus, **caractérisé en ce que** chacun desdits seconds éléments de soudage (21, 24, 29) comprend, à l'une des extrémités, au moins une plaque de soudage respective (25, 26, 32, 33) munie d'une surface de poussée correspondante (25a, 26a, 32a, 33a) inclinée de manière à maintenir, dans ladite seconde position de soudage, la barre longitudinale correspondante (11) au niveau dudit segment (12a, 12b) dudit étrier (12).

6. Dispositif selon les revendications 4 et 5, **caractérisé en ce que** l'inclinaison de la surface de poussée (25a) de la plaque de soudage (25) d'une première desdites deux paires de seconds éléments de soudage (21) est spéculaire à celle de la surface de poussée (26a) de la plaque de soudage (26) de la seconde desdites deux paires de seconds éléments de soudage (24), par rapport à l'axe médian de l'unité de soudage correspondante (17).

7. Dispositif selon la revendication 5, **caractérisé en ce que** chacun desdits seconds éléments de soudage (29) comprend, de part et d'autre d'une extrémité, deux plaques de soudage (32, 33) munies chacune d'une surface de poussée correspondante (32a, 33a) pour la barre longitudinale correspondante (11).

8. Dispositif selon la revendication 7, **caractérisé en ce que** l'inclinaison de la surface de poussée (32a) d'une première desdites deux plaques de soudages (32) desdits seconds éléments de soudage (29) est spéculaire à celle de la surface de poussée (33a) de la seconde plaque de soudage (33), par rapport à l'axe médian de l'unité de soudage correspondante (19).

9. Méthode de fabrication de cages de renforcement constituées d'une pluralité de barres longitudinales (11) assemblées par des étriers transversaux (12) disposés à intervalles le long de celles-ci, ladite méthode comprenant une première étape de positionnement consistant à positionner l'un desdits étriers transversaux (12) au niveau de deux éléments de soudage (20, 21, 24, 27, 29) d'une unité de soudage (17, 19, 117, 118, 119, 120), et au moins une seconde étape de soudage dans laquelle lesdits deux éléments de soudage (20, 21, 24, 27, 29) maintiennent ledit étrier transversal (12) et ladite barre longitudinale (11) assemblés entre eux et les soudent l'un à l'autre ; au moins un premier desdits éléments de soudage (20, 27) étant amené, entre ladite première étape de positionnement et ladite seconde étape de soudage, d'une première position inactive, où il se trouve à l'extérieur du volume occupé par l'étrier transversal correspondant (12) à souder, jusqu'à une seconde position de soudage où il touche de l'extérieur un segment (12a, 12b) dudit étrier transversal (12), et dans laquelle au moins un second desdits éléments de soudage (21, 29) est amené d'une première position inactive, où il se trouve à l'extérieur du volume occupé par ledit étrier transversal (12), jusqu'à une seconde position de soudage où il se trouve à l'intérieur du volume occupé par ledit étrier transversal (12) et touche, de l'intérieur de l'étrier transversal (12), une barre longitudinale correspondante (11) afin de la maintenir en contact avec ledit segment (12a, 12b) dudit étrier transversal (12) et de la préparer à ladite étape de soudage, méthode **caractérisée en ce que** ledit second élément de soudage (21, 24, 29) effectue au moins un premier mouvement d'insertion sensiblement linéaire (M1, M4), depuis ladite première position inactive jusqu'à un certain état à l'intérieur du volume occupé par l'étrier transversal (12), et un second mouvement de positionnement sensiblement linéaire (M2, M3 ; M5, M6) depuis ledit état intérieur jusqu'à ladite seconde position de soudage, ledit premier mouvement (M1, M4) et ledit second mouvement (M2, M3 ; M5, M6) s'effectuant suivant des trajectoires sensiblement parallèles à un plan (P) sur lequel repose ledit étrier transversal (12), méthode dans laquelle, à l'étape de soudage, on utilise au moins une paire de seconds éléments de soudage (21, 24, 29), ceux-ci étant disposés symétriquement de part et d'autre dudit premier élément de soudage (20), sensiblement à cheval sur ledit segment (12a, 12b) à l'intérieur du volume occupé par ledit étrier (12), afin de toucher en deux point ladite barre longitudinale (11) depuis l'intérieur dudit étrier (12).

10. Méthode selon la revendication 9, **caractérisée en ce que** ledit second mouvement se déroule selon un premier sous-mouvement (M2, M5) suivant une première direction orientée vers un côté dudit étrier transversal (12), et un second sous-mouvement (M3, M6), suivant une seconde direction, continue à la première direction, et orientée vers le premier élément de soudage (20, 27).
